# EUROPEAN PATENT APPLICATION

(11) **EP 4 726 504 A1**
(43) Date of publication of application: **15.04.2026**
(21) Application number: 24843272.6
(22) Date of filing: 20.05.2024
(51) Int. Cl.: G06F 1/3234, G06F 1/3218

(54) **ELECTRONIC DEVICE COMPRISING DISPLAY OPERATING WITH STATE FOR LOW POWER CONSUMPTION, AND METHOD THEREFOR**

(30) Priority: 19.07.2023 KR 20230094191; 20.07.2023 KR 20230094925
(71) Applicant: Samsung Electronics Co., Ltd., Suwon-si, Gyeonggi-do 16677 (KR)
(72) Inventor: SHIN, Dongheon, Suwon-si Gyeonggi-do 16677 (KR); KIM, Minwoo, Suwon-si Gyeonggi-do 16677 (KR); KIM, Jihoon, Suwon-si Gyeonggi-do 16677 (KR); LEE, Jihan, Suwon-si Gyeonggi-do 16677 (KR); KIM, Donghwy, Suwon-si Gyeonggi-do 16677 (KR); LEE, Minwoo, Suwon-si Gyeonggi-do 16677 (KR)
(74) Representative: Gulde & Partner
(86) International application number: PCT/KR2024/006777
(87) International publication number: WO 2025/018550

(57) **Abstract**

An electronic device is provided. The electronic device may comprise a display. The electronic device may include an illuminance sensor. The electronic device may include one or more processors including a first processing circuit, a second processing circuit, and a third processing circuit. The third processing circuit may be configured to transmit the illuminance level obtained by using the illuminance sensor to the second processing circuit of the first processing circuit and the second processing circuit in order to maintain a state of the first processing circuit for low power consumption while the display operates with the state for low power consumption.

## Description

### [Technical Field]

The following descriptions relate to an electronic device including a display operating with a state for lower power consumption and a method thereof.

### [Background Art]

An electronic device may include a display to provide visual information and/or visual data. The electronic device may include a rechargeable battery. The electronic device may display an image on the display operating with a state for lower power consumption to reduce power consumption provided to the display using the rechargeable battery.

The above-described information may be provided as a related art for the purpose of helping to understand the present disclosure. No claim or determination is raised as to whether any of the above-described information may be applied as a prior art related to the present disclosure.

### [Disclosure]

### [Technical Solution]

An electronic device is provided. The electronic device may comprise a display. The electronic device may comprise an illuminance sensor. The electronic device may comprise one or more processors including first processing circuitry, second processing circuitry, and third processing circuitry. The third processing circuitry may be configured to, while the display operates with a state for lower power consumption, transmit, to the second processing circuitry from among the first and second processing circuitry, an illuminance level obtained using the illuminance sensor for maintaining a state of the first processing circuitry for lower power consumption. The second processing circuitry may be configured to, in response to the reception of the illuminance level from the third processing circuitry, transmit, to the display, a command to change a brightness level of an image displayed on the display that operates with the state for lower power consumption. The state of the first processing circuitry is maintained while the brightness level of the image is changed from a first brightness level to a second brightness level in accordance with the command.

A method is provided. The method may be executed in an electronic device with a display, an illuminance sensor, and one or more processors including first processing circuitry, second processing circuitry, and third processing circuitry. The method may comprise, while the display operates with a state for lower power consumption, transmitting by the third processing circuitry, to the second processing circuitry from among the first and second processing circuitry, an illuminance level obtained using the illuminance sensor for maintaining a state of the first processing circuitry for lower power consumption. The method may comprise, in response to the reception of the illuminance level from the third processing circuitry, transmitting by the second processing circuitry, to the display, a command to change a brightness level of an image displayed on the display that operates with the state for lower power consumption. The state of the first processing circuitry may be maintained while the brightness level of the image is changed from a first brightness level to a second brightness level in accordance with the command.

A non-transitory computer-readable storage medium is provided. The non-transitory computer-readable storage medium may store one or more programs. The one or more programs may comprise instructions, when executed by third processing circuitry an electronic device with a display, an illuminance sensor, and one or more processors including first processing circuitry, second processing circuitry, and the third processing circuitry, that cause the electronic device to, while the display operates with a state for lower power consumption, transmit, to the second processing circuitry from among the first and second processing circuitry, an illuminance level obtained using the illuminance sensor for maintaining a state of the first processing circuitry for lower power consumption. The one or more programs may comprise instructions, when executed by the second processing circuitry, that cause the electronic device to, in response to the reception of the illuminance level from the third processing circuitry, transmit, to the display, a command to change a brightness level of an image displayed on the display that operates with the state for lower power consumption. The state of the first processing circuitry may be maintained while the brightness level of the image is changed from a first brightness level to a second brightness level in accordance with the command.

An electronic device is provided. The electronic device may comprise a display. The electronic device may comprise an illuminance sensor. The electronic device may include one or more processors. The one or more processors may be configured to, while the display operates with a first state for lower power consumption, change a brightness level of an image displayed on the display by transmitting, to the display, a command corresponding to an illuminance level obtained via the illuminance sensor using a power in a first range. The one or more processors may be configured to, while the display operates with a second state different from the first state, change a brightness level of an image displayed on the display by transmitting, to the display, a command corresponding to the illuminance level using a power in a second range higher than the first range.

A method is provided. The method may be executed in an electronic device with a display and an illuminance sensor. The method may comprise, while the display operates with a first state for lower power consumption, changing a brightness level of an image displayed on the display by transmitting, to the display, a command corresponding to an illuminance level obtained via the illuminance sensor using a power in a first range. The method may comprise, while the display operates with a second state different from the first state, changing a brightness level of an image displayed on the display by transmitting, to the display, a command corresponding to the illuminance level using a power in a second range higher than the first range.

A non-transitory computer-readable storage medium is provided. The non-transitory computer-readable storage medium may store one or more programs. The one or more programs may comprise instructions, when executed by an electronic device with a display and an illuminance sensor, that cause the electronic device to, while the display operates with a first state for lower power consumption, change a brightness level of an image displayed on the display by transmitting, to the display, a command corresponding to an illuminance level obtained via the illuminance sensor using a power in a first range. The one or more programs may comprise instructions, when executed by the electronic device, that cause the electronic device to, while the display operates with a second state different from the first state, change a brightness level of an image displayed on the display by transmitting, to the display, a command corresponding to the illuminance level using a power in a second range higher than the first range.

### [Description of the Drawings]

FIG. 1 is a simplified block diagram of an exemplary electronic device.
FIG. 2 illustrates an exemplary method of changing a brightness level of an image displayed on a display operating with a state for lower power consumption.
FIG. 3 illustrates an exemplary method of transmitting an illumination level from third processing circuitry to second processing circuitry to change a brightness level of an image displayed on a display operating with a state for lower power consumption.
FIG. 4 illustrates an exemplary method of writing a plurality of commands to a volatile memory to change a brightness level of an image displayed on a display operating with a state for lower power consumption.
FIG. 5A illustrates an exemplary method of obtaining a plurality of commands written to a volatile memory to change a brightness level of an image displayed on a display operating with a state for lower power consumption.
FIGS. 5B and 5C illustrate an example of a plurality of first candidate brightness levels compared with a plurality of second candidate brightness levels.
FIG. 6 illustrates an exemplary method of changing a brightness level of an image displayed on a display operating with another state distinct from a state for lower power consumption.
FIG. 7 is a block diagram of an electronic device in a network environment according to various embodiments.
FIG. 8 is a block diagram of a display module according to various embodiments.

### [Mode for Invention]

An electronic device may include a display. The display may operate with a state for lower power consumption.

The electronic device may include an illuminance sensor. The electronic device may (adaptively) change or adjust a brightness level of an image displayed on the display, based on changes in illuminance level obtained using the illuminance sensor. For example, the electronic device may change the brightness level from a first brightness level to a second brightness level when the illuminance level is changed from a first illuminance level to a second illuminance level. For example, obtaining the illuminance level and transmitting, to the display, a command and/or an instruction for the change to the second brightness level may be executed within the electronic device to change the brightness level.

For example, changing the brightness level may be executed while the display operates with the state for lower power consumption. For example, execution of obtaining the illuminance level and transmitting, to the display, the command for the change to the second brightness level to change the brightness level while the display operates with the state for lower power consumption, using first processing circuitry (illustrated below), may cause relatively higher power consumption.

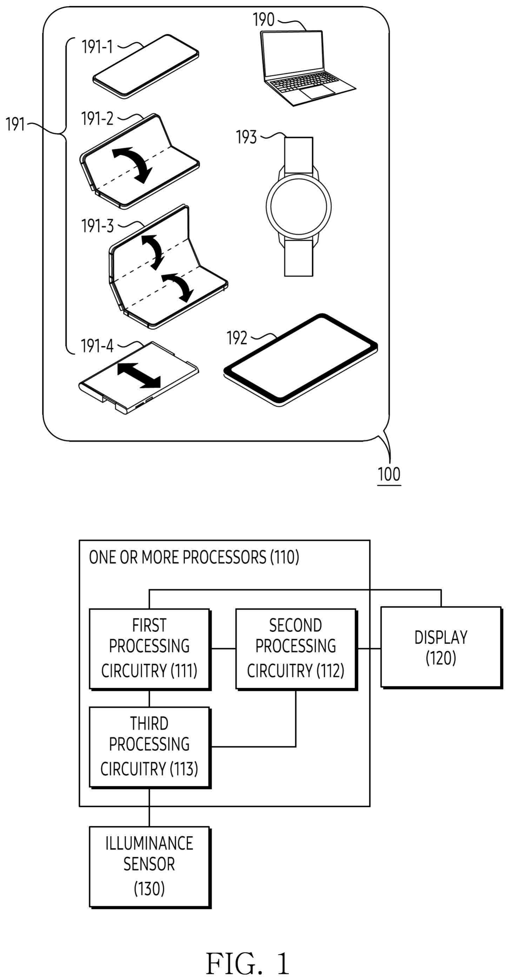

An electronic device 100 to be exemplified in descriptions of FIGS. 1 to 6 may reduce power consumption by executing, using second processing circuitry (illustrated below), obtaining the illuminance level and transmitting, to the display, the command for the change to the second brightness level to change the brightness level while the display operates with the state for lower power consumption. For example, the electronic device 100 may maintain a state of the first processing circuitry for lower power consumption by executing, using the second processing circuitry, obtaining the illuminance level and transmitting, to the display, the command for the change to the second brightness level to change the brightness level while the display operates with the state for lower power consumption.

FIG. 1 is a simplified block diagram of an exemplary electronic device.

Referring to FIG. 1, an electronic device 100 may be one of various types of electronic devices such as a laptop 190, smartphones 191 having various form factors (e.g., a bar-type smartphone 191-1, a foldable-type smartphone 191-2, a multi-foldable-type smartphone 191-3, or a slidable (or rollable) smartphone 191-4), a tablet 192, a wearable device 193 (e.g., a smart watch 193), a cellular phone, and other similar computing devices. Components illustrated in FIG. 1, their relationships, and their functions are merely exemplary and do not limit implementations described or claimed in this document. The electronic device 100 may be referred to as a user device, a multifunctional device, a mobile device, or a portable device.

The electronic device 100 may include components including one or more processors 110, a display 120, and an illuminance sensor 130. The components are merely exemplary. For example, the electronic device 100 may further include another component (e.g., a volatile memory such as a dynamic random access memory (DRAM) and/or a last level cache (LLC)). For example, some components may be omitted or excluded from the electronic device 100.

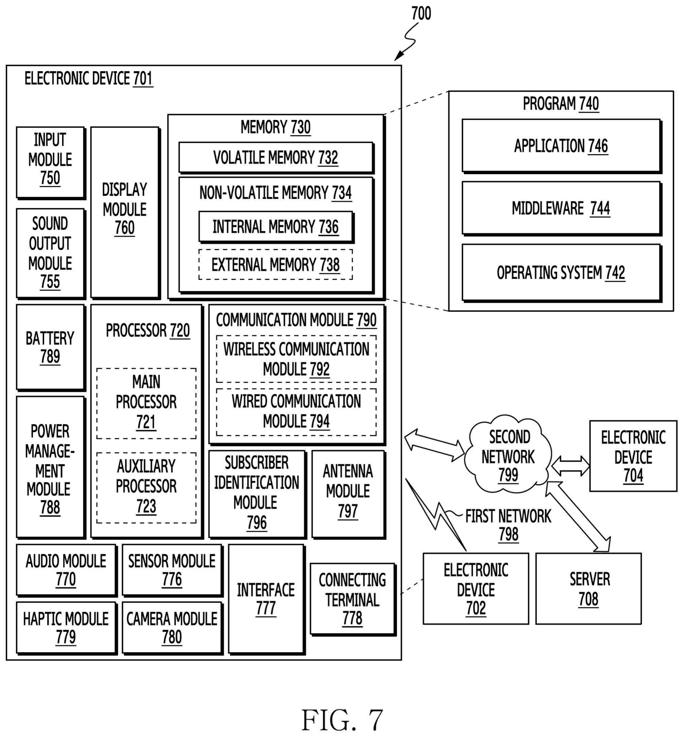

The one or more processors 110 may include at least a portion of a processor 720 of FIG. 7 or correspond to at least a portion of the processor 720 of FIG. 7. For example, the one or more processors 110 may be implemented as a single chip (or a single chipset) such as a system on chip (SoC). For example, the one or more processors 110 may also be implemented as multiple chips (or multiple chipsets). For example, the one or more processors 110 may be referred to as a main processor (e.g., a main processor 721 of FIG. 7) or an application processor (AP). For example, a portion of the one or more processors 110 may be referred to as the main processor or the AP, and another portion (or remaining portion) of the one or more processors 110 may be referred to as an auxiliary processor (e.g., an auxiliary processor 723 of FIG. 7).

The one or more processors 110 may be used to change, adjust, or switch a brightness level of an image displayed on the display 120. For example, the one or more processors 110 may be used to change a brightness level of an image displayed on the display 120 operating with a first state for lower power consumption. For example, the one or more processors 110 may be used to change a brightness level of an image displayed on the display 120 operating with a second state distinct from the first state.

For example, the display 120 may operate with the first state for a function of an always on display (AoD). As a non-limiting example, the function of the AoD may indicate a function of displaying visual information such as a background screen, a lock screen, an execution screen, time information, notification information, and/or guide information on the display 120 during at least a portion of a time interval in which an event (e.g., a user input) for changing at least a portion of a state of one or more software applications executed in the electronic device 100 is not caused (or is ceased). As a non-limiting example, the function of the AoD may indicate a function of displaying the visual information on the display 120 during at least a portion of a time interval in which at least a portion of a state of a service provided by the electronic device 100 is not changed (or is maintained). As a non-limiting example, since the function of the AoD is activated during at least a portion of a time interval in which use of the electronic device 100 is ceased, a brightness level of an image displayed on the display 120 during a time interval enabling the function of the AoD may be lower than a brightness level of an image displayed on the display 120 during a time interval disabling the function of the AoD, for lower power consumption.

For example, the display 120 may operate with the second state during a time interval in which an event (e.g., a user input) for changing at least a portion of a state of one or more software applications executed in the electronic device 100 is caused. For example, the display 120 may operate with the second state during a time interval in which a state of a service provided by the execution screen is changed.

For example, the one or more processors 110 may include first processing circuitry 111, second processing circuitry 112, and third processing circuitry 113.

For example, the first processing circuitry 111, the second processing circuitry 112, and the third processing circuitry 113 may be included in a single chip or a single chipset.

For example, the first processing circuitry 111, the second processing circuitry 112, and the third processing circuitry 113 may be included in multiple chips. As a non-limiting example, the first processing circuitry 111 may be included in a first chip, and the second processing circuitry 112 and the third processing circuitry 113 may be included in a second chip separated from the first chip. As a non-limiting example, the first processing circuitry 111 may be included in the first chip, the second processing circuitry 112 may be included in a second chip separated from the first chip, and the third processing circuitry 113 may be included in a third chip separated from the first chip and the second chip. As a non-limiting example, the first processing circuitry 111 and the second processing circuitry 112 may be included in the first chip, and the third processing circuitry 113 may be included in a second chip separated from the first chip. As a non-limiting example, the first processing circuitry 111 and the third processing circuitry 113 may be included in the first chip, and the second processing circuitry 112 may be included in a second chip separated from the first chip.

As a non-limiting example, the first processing circuitry 111 may be a central processing unit (CPU), the second processing circuitry 112 may be a micro processing unit (MPU), and the third processing circuitry 113 may be a sensor interface (or a sensor hub). As a non-limiting example, the first processing circuitry 111 may be the CPU, the second processing circuitry 112 may be a portion of the sensor interface, and the third processing circuitry 113 may be another portion (or remaining portion) of the sensor interface (or the sensor hub). As a non-limiting example, the first processing circuitry 111 may be a big core (or a performance core) of the CPU, the second processing circuitry 112 may be a little core (or an efficiency core) of the CPU, and the third processing circuitry 113 may be the sensor interface.

For example, the first processing circuitry 111 may be in a third state for lower power consumption. For example, the first processing circuitry 111 may be in the third state of the first processing circuitry 111 during at least a portion of a time interval in which the display 120 operates with the first state.

For example, the third state of the first processing circuitry 111 may include a halt state (e.g., a C1 mode) of stopping (or turning off) main internal clocks of a CPU through software and keeping a bus interface unit (e.g., a path connecting the first processing circuitry 111 and other components (e.g., the second processing circuitry 112, the third processing circuitry 113, and/or the display 120)) and an interrupt controller (e.g., a programmable interrupt controller (PIC)) running at full speed, an enhanced halt state (e.g., a C1E mode) of stopping the main internal clocks through software, reducing a voltage provided to the CPU, and keeping the bus interface unit and the interrupt controller running at full speed, a state (e.g., a C1E mode) of stopping all internal clocks of the CPU, a stop grant state (e.g., a C2 mode) of stopping the main internal clocks of the CPU through hardware and keeping the bus interface unit and the interrupt controller running at full speed, a stop clock state (e.g., a C2 mode) of stopping internal and external clocks of the CPU through hardware, an extended stop grant state (e.g., a C2E mode) of stopping the main internal clocks of the CPU through hardware, reducing a voltage of the CPU, and keeping the bus interface unit and the interrupt controller running at full speed, a sleep state (e.g., a C3 mode) of stopping all internal clocks of the CPU, a deep sleep state (e.g., a C3 mode) of stopping all internal and external clocks of the CPU, a state (e.g., a C3 mode) of stopping all internal clocks of the CPU and reducing a voltage of the CPU, a deeper sleep state (e.g., a C4 mode) of reducing a voltage of the CPU, an enhanced deeper sleep state (e.g., a C4E mode or a C5 mode) of reducing a voltage of the CPU even more and turning off a memory cache, and/or a deep power down state (e.g., a C6 mode) of reducing an internal voltage of the CPU to a value including 0 volts(V).

For example, the third state of the first processing circuitry 111 may be referred to as a sleep state, a hibernate state, a soft off state, or a mechanical off state.

For example, the first processing circuitry 111 may be in a fourth state for performance. For example, the first processing circuitry 111 may be in the fourth state of the first processing circuitry 111 during a time interval in which the display 120 operates with the second state. As a non-limiting example, the first processing circuitry 111 may be in the fourth state of the first processing circuitry 111 during at least another portion of a time interval in which the display 120 operates with the first state.

For example, the fourth state of the first processing circuitry 111 may include an operating state in which the CPU is fully turned on. For example, the fourth state of the first processing circuitry 111 may be referred to as a working state.

For example, the second processing circuitry 112 may be used for control of the display 120 during at least a portion of a time interval in which the first processing circuitry 111 is in the third state. For example, the second processing circuitry 112 may be used to control the display 120 operating with the first state, based on the third state of the first processing circuitry 111. As a non-limiting example, the second processing circuitry 112 may be activated based on a change from the fourth state of the first processing circuitry 111to the third state of the first processing circuitry 111. As a non-limiting example, the second processing circuitry 112 may be deactivated based on a change from the third state of the first processing circuitry 111 to the fourth state of the first processing circuitry 111. As a non-limiting example, the second processing circuitry 112 may be processing circuitry dedicated, designated, or specified for controlling the display 120 operating with the first state.

For example, the third processing circuitry 113 may be configured to process data regarding a state of the electronic device 100 and/or a state around the electronic device 100, obtained through a sensor (e.g., the illuminance sensor 130), into a format suitable for the first processing circuitry 111 and/or the second processing circuitry 112. For example, the third processing circuitry 113 may be configured to obtain an illuminance level by processing illuminance data obtained from the illuminance sensor 130.

The display 120 may include at least a portion of a display module 760 of FIG. 7 or correspond to at least a portion of the display module 760 of FIG. 7.

The illuminance sensor 130 may include at least a portion of a sensor module 776 of FIG. 7 (preferably a portion of the sensor module 776 of FIG. 7) or correspond to at least a portion of the sensor module 776 of FIG. 7 (preferably a portion of the sensor module 776 of FIG. 7).

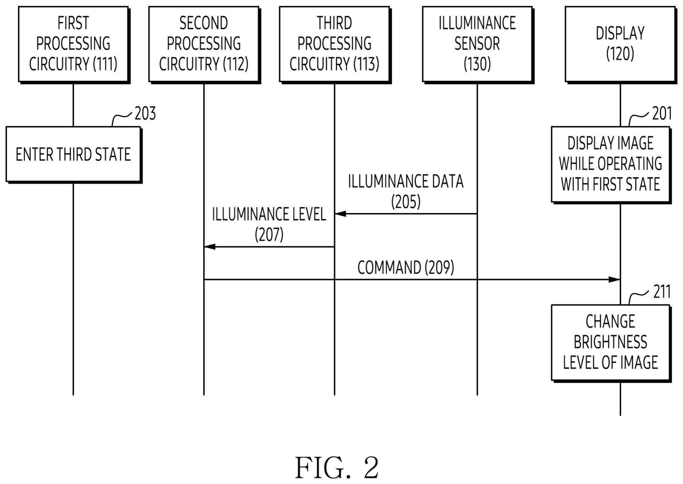

The components of the electronic device 100 illustrated through FIG. 1 may be used to execute operations illustrated in descriptions of FIGS. 2 to 6.

FIG. 2 illustrates an exemplary method of changing a brightness level of an image displayed on a display operating with a state for lower power consumption.

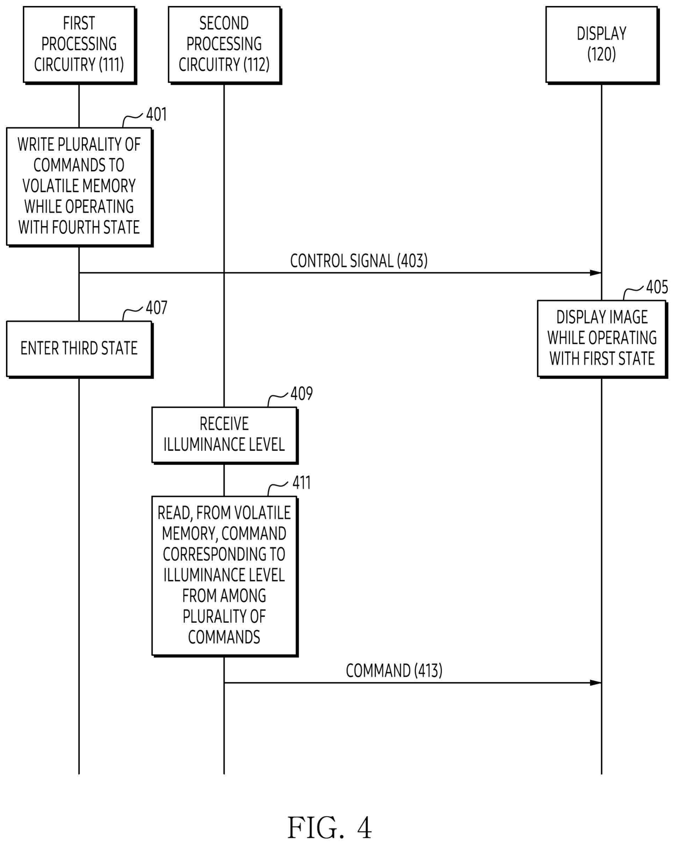

Referring to FIG. 2, in operation 201, the display 120 may display an image while the display 120 operates with the first state for lower power consumption. For example, the image may be displayed on the display 120 for the function of the AoD. As a non-limiting example, the display 120 may operate with the first state, based on a command (e.g., a control signal of operation 403 in FIG. 4) received from the first processing circuitry 111. The command may be transmitted from the first processing circuitry 111 in the fourth state.

In operation 203, the first processing circuitry 111 may enter the third state for lower power consumption. As a non-limiting example, the first processing circuitry 111 may enter the third state after the second processing circuitry 112 is activated for the display 120 operating with the first state. As a non-limiting example, the first processing circuitry 111 may enter the third state after transmitting, to the display 120, a command (e.g., the control signal of operation 403 in FIG. 4) for changing to the first state.

In operation 205, the illuminance sensor 130 may transmit, to the third processing circuitry 113, illuminance data, which is data regarding illuminance around the electronic device 100, while the display 120 operates with the first state. The third processing circuitry 113 may receive the illuminance data from the illuminance sensor 130.

In operation 207, the third processing circuitry 113 may transmit, to the second processing circuitry 112 from among the first processing circuitry 111 and the second processing circuitry 112, an illuminance level corresponding to the illuminance data. For example, the third processing circuitry 113 may transmit, provide, or indicate the illuminance level to the second processing circuitry 112 from among the first processing circuitry 111 and the second processing circuitry 112 to maintain the third state of the first processing circuitry 111. For example, the third processing circuitry 113 may transmit the illuminance level to the second processing circuitry 112 from among the first processing circuitry 111 and the second processing circuitry 112 to reduce power consumed while the display 120 operates with the first state. The second processing circuitry 112 may receive the illuminance level from the third processing circuitry 113.

In operation 209, the second processing circuitry 112 may transmit, to the display 120, a command (or data) (or signal) to change a brightness level of an image displayed on the display 120 operating with the first state, in response to receiving the illuminance level from the third processing circuitry 113. As a non-limiting example, the command may indicate a gamma voltage (or a source voltage) (or a drain voltage) for setting a brightness level of the image.

For example, the command may be transmitted to the display 120 through a mobile industry processor interface (MIPI). The display 120 may receive the command from the second processing circuitry 112.

In operation 211, the display 120 may change a brightness level of the image displayed on the display 120 operating with the first state from a first brightness level to a second brightness level, in response to the command. For example, the second brightness level may correspond to the command. For example, the second brightness level may correspond to the illuminance level (or the illuminance data).

For example, the third state of the first processing circuitry 111 may be maintained while the brightness level of the image is changed from the first brightness level to the second brightness level in accordance with the command. For example, since the third state of the first processing circuitry 111 is maintained while the brightness level of the image displayed on the display 120 operating with the first state is changed, the electronic device 100 (e.g., the first processing circuitry 111) may reduce power consumed for the change of the brightness level of the image displayed on the display 120 operating with the first state.

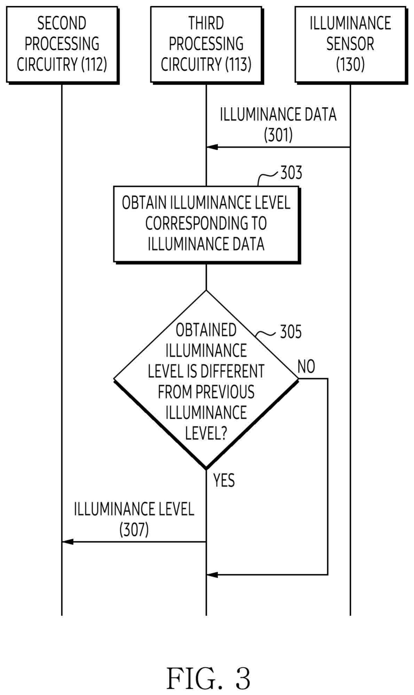

As a non-limiting example, the third processing circuitry 113 may, before transmitting the illuminance level in operation 207, obtain the illuminance level corresponding to the illuminance data received in operation 205 and compare the obtained illuminance level with a previous illuminance level that was last transmitted to the second processing circuitry 112 (or the first processing circuitry 111). Comparison between the illuminance level and the previous illuminance level is exemplified in descriptions of FIG. 3.

FIG. 3 illustrates an exemplary method of transmitting an illumination level from third processing circuitry 113 to second processing circuitry 112 to change a brightness level of an image displayed on a display operating with a state for lower power consumption.

Referring to FIG. 3, in operation 301, the illuminance sensor 130 may transmit, to the third processing circuitry 113, illuminance data, which is data regarding illuminance around the electronic device 100, while the display 120 operates with the first state. The third processing circuitry 113 may receive the illuminance data. Operation 301 may correspond to operation 205 of FIG. 2.

In operation 303, the third processing circuitry 113 may obtain or identify an illuminance level corresponding to the illuminance data received in operation 301. As a non-limiting example, the third processing circuitry 113 may obtain the illuminance level corresponding to the illuminance data based on reference data indicated as Table 1 below.

**[Tale 1]**

| range of illuminance data (a) | illuminance data (a) |
|---|---|
| a₀ ≤ a < a₁ | b₁ |
| a₁ ≤ a < a₂ | b₂ |
| ... | ... |
| aₖ₋₁ ≤ a < aₖ | bₖ |
| ... | ... |
| aₙ₋₁ ≤ a < aₙ | bₙ |

In Table 1, 'a' indicates illuminance data received from the illuminance sensor 130, and **a₀, a₁, ... , aₖ, ... , aₙ** (n is any natural number equal to or greater than 0, and k is a natural number smaller than n) indicate values for a range of the illuminance data, and **b₁** to **bₙ** indicate illuminance levels corresponding to the range.

For example, in a case that illuminance data (a) is **a₁**, the third processing circuitry 113 may obtain an illuminance level corresponding to the illuminance data (a) as **b₂**. For example, in a case that the illuminance data (a) is **aₖ₋₁**, the third processing circuitry 113 may obtain an illuminance level corresponding to the illuminance data (a) as **bₖ**.

In operation 305, the third processing circuitry 113 may determine or identify whether the illuminance level obtained in operation 303 is different from a previous illuminance level that was last transmitted to the second processing circuitry 112 (or the first processing circuitry 111). For example, in a case that the illuminance level obtained in operation 303 is **b₂** and the previous illuminance level is **b₂**, the third processing circuitry 113 may identify or determine that the illuminance level obtained in operation 303 is the same as the previous illuminance level. For example, in a case that the illuminance level obtained in operation 303 is **b₂** and the previous illuminance level is **b₁,** the third processing circuitry 113 may determine or identify that the illuminance level obtained in operation 303 is different from the previous illuminance level. For example, in a case that the illuminance level obtained in operation 303 is **b₂** and the previous illuminance level is **bₙ**, the third processing circuitry 113 may determine or identify that the illuminance level obtained in operation 303 is different from the previous illuminance level.

The third processing circuitry 113 may execute operation 307 on a condition that the illuminance level obtained in operation 303 is different from the previous illuminance level. The third processing circuitry 113 may refrain from, block, skip, or bypass transmitting the illuminance level obtained in operation 303 on a condition that the illuminance level obtained in operation 303 is the same as the previous illuminance level. For example, on a condition that the illuminance level obtained in operation 303 is the same as the previous illuminance level, the third processing circuitry 113 may monitor or check whether illuminance data is received from the illuminance sensor 130 as in operation 301 without executing operation 307.

In operation 307, the third processing circuitry 113 may transmit the illuminance level to the second processing circuitry 112, in response to the illuminance level being different from the previous illuminance level. For example, the second processing circuitry 112 may receive the illuminance level from the third processing circuitry 113 while the display 120 operates with the first state. Operation 307 may correspond to operation 207 of FIG. 2.

For example, the electronic device 100 may enhance efficiency of transmission from the third processing circuitry 113 to the second processing circuitry 112 through operations exemplified in descriptions of FIG. 3.

Referring back to FIG. 2, as a non-limiting example, the second processing circuitry 112 may, before transmitting the command in operation 209, read or obtain the command from a volatile memory of the electronic device 100. Reading or obtaining the command from the volatile memory is exemplified in descriptions of FIG. 4.

FIG. 4 illustrates an exemplary method of writing a plurality of commands to a volatile memory to change a brightness level of an image displayed on a display operating with a state for lower power consumption.

Referring to FIG. 4, in operation 401, the first processing circuitry 111 may write the plurality of commands to the volatile memory (or may at least temporarily store the plurality of commands in the volatile memory) while operating with the fourth state.

The plurality of commands may be written to the volatile memory to respectively provide a plurality of brightness levels (e.g., including the first brightness level and the second brightness level exemplified in the description of FIG. 2).

The plurality of commands may be respectively allocated to a plurality of illuminance levels. For example, the plurality of commands may respectively correspond to the plurality of illuminance levels to respectively provide the plurality of brightness levels. As a non-limiting example, the plurality of illuminance levels may be b₁ to bₙ of Table 1.

For example, the plurality of commands may be indicated as shown in Table 2.

**[Table 2]**

| illuminance level | command | brightness level |
|---|---|---|
| b₁ | c₁ | d₁ |
| b₂ | c₂ | d₂ |
| ... | ... | ... |
| bₖ | cₖ | dₖ |
| ... | ... | ... |
| bₙ | cₙ | dₙ |

In Table 2, **b₁** to **bₙ** indicate the plurality of illuminance levels, **c₁** to **cₙ** respectively indicate the plurality of commands, and d₁ to dₙ respectively indicate the plurality of brightness levels. The unit of d₁ to dₙ is not described in Table 2, but is nit (or candela per square meter (**cd/m²**)).

In Table 2, the command **c₁** is a command for providing the brightness level **d₁** on the display 120 in a case that the illuminance level is **b₁** and the command **cₙ** is a command for providing the brightness level dₙ in a case that the illuminance level is **bₙ**.

As a non-limiting example, operation 401 may be executed in response to a boot-up of the electronic device 100. As a non-limiting example, operation 401 may be executed based on an activation of a function (e.g., a function of automatic brightness change (or adjustment)) for (adaptively) changing a brightness level provided by the display 120 in accordance with a change in illuminance level. For example, operation 401 may be executed based on the activation of the function in response to the boot-up. For example, operation 401 may be executed in response to activating the function in accordance with a user input after the boot-up is completed.

As a non-limiting example, the first processing circuitry 111 may write the plurality of commands to the volatile memory, by using a hardware abstraction layer (HAL). For example, the first processing circuitry 111 may write the plurality of commands to the volatile memory through a display driver by using the HAL, in response to the boot-up of the electronic device 100 or during the boot-up of the electronic device 100. For example, since the HAL is available while the first processing circuitry 111 operates with the fourth state, the plurality of commands may be written to the volatile memory while the first processing circuitry 111 operates with the fourth state.

As a non-limiting example, operation 401 may be executed before operation 203 of FIG. 2. As a non-limiting example, operation 401 may be executed before operation 201 of FIG. 2. As a non-limiting example, operation 401 may be executed while the display 120 operates with the second state.

In operation 403, the first processing circuitry 111 may transmit, to the display 120, a control signal for requesting the display 120 to operate with the first state. For example, the control signal may be transmitted in response to identifying (or monitoring) that an event for changing at least a portion of a state of one or more software applications being executed in the electronic device 100 does not occur for a reference time. For example, the control signal may be transmitted based on a user input causing activation of the function of the AoD. For example, the control signal may be transmitted in response to identifying (or monitoring) that at least a portion of a state of a service provided by the electronic device 100 is not changed for a reference time. For example, the control signal may be transmitted in response to identifying (or monitoring) that use of the electronic device 100 is ceased for a reference time.

The display 120 may receive the control signal.

In operation 405, the display 120 may display an image while operating with the first state, based on the control signal. For example, the display 120 may enter the first state in response to the control signal and may display the image while operating with the first state. Operation 405 may correspond to operation 201 of FIG. 2.

In operation 407, the first processing circuitry 111 may enter the third state. Operation 407 may correspond to operation 203 of FIG. 2.

In operation 409, the second processing circuitry 112 may receive an illuminance level. Operation 409 may correspond to operation 207 of FIG. 2 or operation 307 of FIG. 3.

In operation 411, the second processing circuitry 112 may read or obtain, from the volatile memory, a command corresponding to the illuminance level from among the plurality of commands, in response to the reception of the illuminance level.

In operation 413, the second processing circuitry 112 may transmit the command to the display 120. Operation 413 may correspond to operation 209 of FIG. 2.

For example, the electronic device 100 may reduce power consumption for the change of the brightness level of the image displayed on the display 120 operating with the first state, by storing, in the volatile memory, the plurality of commands readable by the second processing circuitry 112 through the first processing circuitry 111 operating with the fourth state.

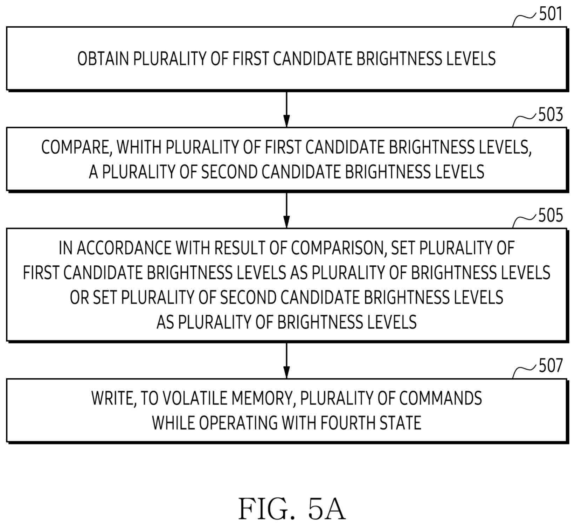

As a non-limiting example, the first processing circuitry 111 may set the plurality of brightness levels to brightness levels set according to a user input (e.g., a user input on an executable object in a quick panel for brightness change or a user input received through a display brightness setting in a global setting menu) for setting a brightness level provided by the display 120 operating with the second state, in a case that a reference condition is satisfied. Setting the plurality of brightness levels is exemplified in the description of FIGS. 5A to 5C.

FIG. 5A illustrates an exemplary method of obtaining a plurality of commands written to a volatile memory to change a brightness level of an image displayed on a display operating with a state for lower power consumption.

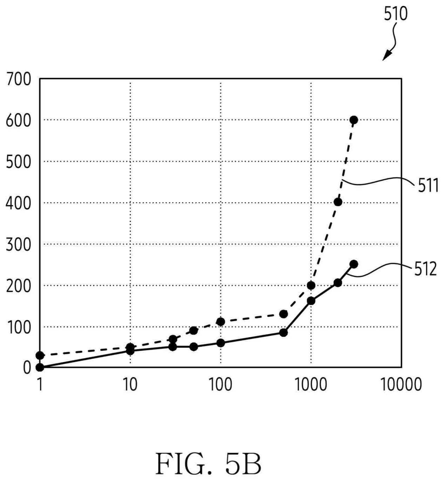

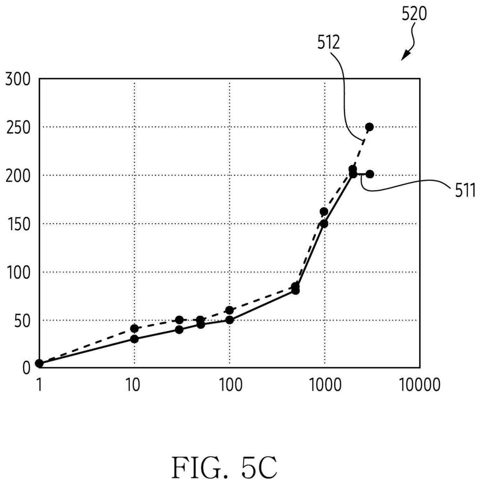

FIGS. 5B and 5C illustrate an example of a plurality of first candidate brightness levels compared with a plurality of second candidate brightness levels.

Referring to FIG. 5A, in operation 501, the first processing circuitry 111 may obtain a plurality of first candidate brightness levels. The plurality of first candidate brightness levels may be obtained based on a user input for setting a brightness level provided by the display 120 operating with the second state. For example, the plurality of first candidate brightness levels may correspond to brightness levels set (or specified, identified, or designated) by the user input (e.g., the brightness levels are respectively allocated or linked to the plurality of illuminance levels exemplified in the description of FIG. 4 for brightness setting of the display 120 operating with the second state). For example, the plurality of first candidate brightness levels may be allocated respectively to the plurality of illuminance levels.

In operation 503, the first processing circuitry 111 may compare, with the plurality of first candidate brightness levels obtained in response to the user input, a plurality of second candidate brightness levels. The plurality of second candidate brightness levels may be respectively allocated to the plurality of illuminance levels for setting a default brightness level (e.g., a default brightness level of the function of the AoD) provided by the display 120 operating with the first state.

In operation 505, in accordance with a result of the comparison performed in operation 503, the first processing circuitry 111 may set the plurality of first candidate brightness levels as the plurality of brightness levels or may set the plurality of second candidate brightness levels as the plurality of brightness levels.

As a non-limiting example, the first processing circuitry 111 may set the plurality of second candidate brightness levels as the plurality of brightness levels, on a condition that each of the plurality of first candidate brightness levels is higher than or equal to each of the plurality of second candidate brightness levels. As a non-limiting example, as described in the description of FIG. 1, since a brightness level provided by the display 120 operating with the first state may be lower than a brightness level provided by the display 120 operating with the second state, the first processing circuitry 111 may set the plurality of second candidate brightness levels as the plurality of brightness levels based on each of the plurality of first candidate brightness levels being higher than or equal to each of the plurality of second candidate brightness levels.

For example, referring to FIG. 5B, a chart 510 indicates the plurality of first candidate brightness levels compared with the plurality of second candidate brightness levels. A horizontal axis of the chart 510 indicates illuminance levels, and a vertical axis of the chart 510 indicates brightness levels. A line 511 in the chart 510 indicates the plurality of first candidate brightness levels, and a line 512 in the chart 510 indicates the plurality of second candidate brightness levels. The first processing circuitry 111 may set the plurality of second candidate brightness levels as the plurality of brightness levels, based on each of the plurality of first candidate brightness levels being higher than or equal to each of the plurality of second candidate brightness levels, as indicated by the lines 511 and 512 in the chart 510.

Referring back to FIG. 5A, as a non-limiting example, the first processing circuitry 111 may set the plurality of first candidate brightness levels as the plurality of brightness levels on a condition that each of the plurality of first candidate brightness levels is lower than each of the plurality of second candidate brightness levels. For example, each of the plurality of first candidate brightness levels being lower than each of the plurality of second candidate brightness levels may indicate that a user of the electronic device 100 prefers a very dark setting of the display 120. For example, the first processing circuitry 111 may set the plurality of first candidate brightness levels as the plurality of brightness levels, based on each of the plurality of first candidate brightness levels being lower than each of the plurality of second candidate brightness levels, to reflect the user's preference.

For example, referring to FIG. 5C, a chart 520 indicates the plurality of first candidate brightness levels compared with the plurality of second candidate brightness levels. A horizontal axis of the chart 520 indicates illuminance levels, and a vertical axis of the chart 520 indicates brightness levels. A line 511 in the chart 520 indicates the plurality of first candidate brightness levels, and a line 512 in the chart 520 indicates the plurality of second candidate brightness levels. The first processing circuitry 111 may set the plurality of first candidate brightness levels as the plurality of brightness levels, based on each of the plurality of first candidate brightness levels being lower than each of the plurality of second candidate brightness levels, as indicated by the lines 511 and 512 in the chart 520.

Referring back to FIG. 5A, as a non-limiting example, on a condition that a portion of the plurality of first candidate brightness levels is higher than or equal to a portion of the plurality of second candidate brightness levels and another portion of the plurality of first candidate brightness levels is lower than another portion of the plurality of second candidate brightness levels, the first processing circuitry 111 may set the plurality of brightness levels based on the portion of the plurality of second candidate brightness levels and the another portion of the plurality of first candidate brightness levels.

In operation 507, the first processing circuitry 111 may write, to the volatile memory, a plurality of commands obtained based on the plurality of brightness levels set in operation 505. Operation 507 may correspond to operation 401 of FIG. 4.

For example, the electronic device 100 may provide a service reflecting a user preference through setting the plurality of brightness levels in accordance with a comparison between the plurality of first candidate brightness levels and the plurality of second candidate brightness levels.

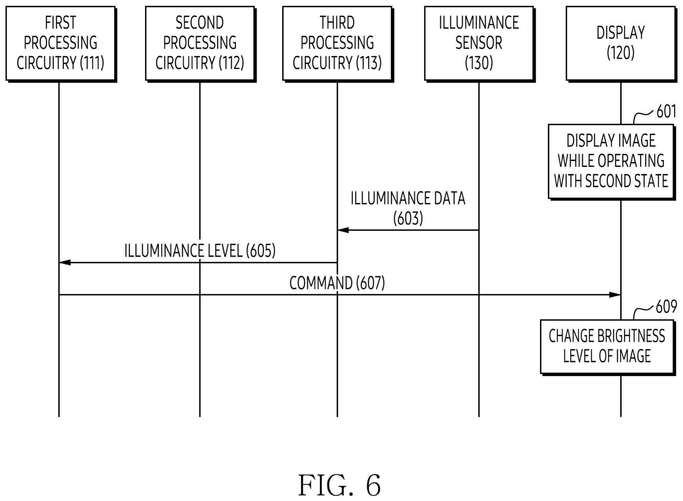

As a non-limiting example, the third processing circuitry 113 may transmit the illuminance level exemplified in the description of FIG. 2 to the first processing circuitry 111 from among the first processing circuitry 111 and the second processing circuitry 112, while the display 120 operates with the second state. The transmission is exemplified in the description of FIG. 6.

FIG. 6 illustrates an exemplary method of changing a brightness level of an image displayed on a display operating with another state distinct from a state for lower power consumption.

Referring to FIG. 6, in operation 601, the display 120 may display an image while operating with the second state. Although not illustrated in FIG. 6, the first processing circuitry 111 may operate with the fourth state while the display 120 operates with the second state. Although not illustrated in FIG. 6, as a non-limiting example, the second processing circuitry 112 may be deactivated while the display 120 operates with the second state.

In operation 603, the illuminance sensor 130 may transmit illuminance data, which is data regarding illuminance around the electronic device 100, to the third processing circuitry 113. The third processing circuitry 113 may receive the illuminance data from the illuminance sensor 130.

In operation 605, the third processing circuitry 113 may transmit an illuminance level corresponding to the illuminance data to the first processing circuitry 111 from among the first processing circuitry 111 and the second processing circuitry 112. For example, since the first processing circuitry 111 operates with the fourth state while the display 120 operates with the second state, the third processing circuitry 113 may transmit the illuminance level to the first processing circuitry 111. The first processing circuitry 111 may receive the illuminance level.

In operation 607, the first processing circuitry 111 may transmit a command corresponding to the illuminance level to the display 120. For example, the first processing circuitry 111 may read the command corresponding to the illuminance level from among the plurality of commands written to the volatile memory through a display driver by using the HAL, and transmit the read command to the display 120. As a non-limiting example, the plurality of commands exemplified in operation 607 may be stored in another area distinct from an area in which the plurality of commands exemplified in the descriptions of FIG. 4 and FIG. 5A are stored in the volatile memory. Meanwhile, the display 120 may receive the command.

In operation 609, the display 120 may change the brightness level of the image based on the command.

The operations exemplified above may be represented as follows.

The one or more processors 110 may change a brightness level of an image displayed on the display 120, by transmitting, to the display 120, a command corresponding to an illuminance level obtained through the illuminance sensor 130 by using a power within a first range while the display 120 operates with the first state for lower power consumption. The one or more processors 110 may change a brightness level of an image displayed on the display 120, by transmitting, to the display 120, a command corresponding to the illuminance level by using a power within a second range higher than the first range while the display 120 operates with a second state different from the first state.

For example, the one or more processors 110 may write, to the volatile memory, a plurality of commands respectively corresponding to a plurality of illuminance levels for the display 120 to be operated with the first state, while the display 120 operates with the second state and the one or more processors 110 operate by using a power within the second range. For example, the one or more processors 110 may operate by using the power within the first range in accordance with the display 120 operating with the first state, after the plurality of commands are written to the volatile memory. For example, the one or more processors 110 may read, from the volatile memory, the command corresponding to the illuminance level from among the plurality of commands, and may transmit the command to the display 120, while the display 120 operates with the first state.

For example, the one or more processors 110 may write the plurality of commands to the volatile memory, based on activation of a function of adaptively changing a brightness level provided by the display 120 in accordance with changes in illuminance level, in response to a boot-up of the electronic device 100.

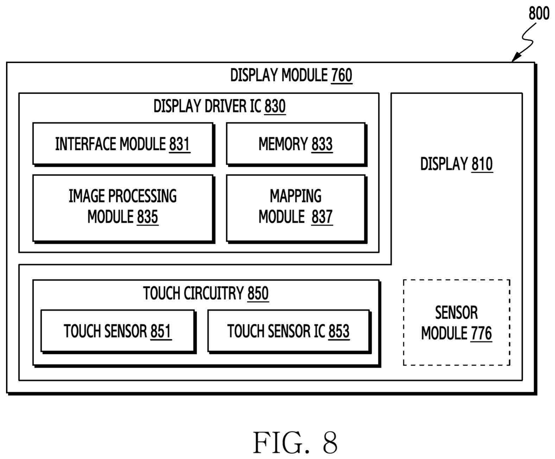

The above-exemplified operations may be executed in the electronic device 701 exemplified in the description of FIG. 7. For example, the electronic device 701 may include the display module 760 exemplified in the description of FIG. 8.

FIG. 7 is a block diagram illustrating an electronic device 701 in a network environment 700 according to various embodiments. Referring to FIG. 7, the electronic device 701 in the network environment 700 may communicate with an electronic device 702 via a first network 798 (e.g., a short-range wireless communication network), or at least one of an electronic device 704 or a server 708 via a second network 799 (e.g., a long-range wireless communication network). According to an embodiment, the electronic device 701 may communicate with the electronic device 704 via the server 708. According to an embodiment, the electronic device 701 may include a processor 720, memory 730, an input module 750, a sound output module 755, a display module 760, an audio module 770, a sensor module 776, an interface 777, a connecting terminal 778, a haptic module 779, a camera module 780, a power management module 788, a battery 789, a communication module 790, a subscriber identification module(SIM) 796, or an antenna module 797. In some embodiments, at least one of the components (e.g., the connecting terminal 778) may be omitted from the electronic device 701, or one or more other components may be added in the electronic device 701. In some embodiments, some of the components (e.g., the sensor module 776, the camera module 780, or the antenna module 797) may be implemented as a single component (e.g., the display module 760).

The processor 720 may execute, for example, software (e.g., a program 740) to control at least one other component (e.g., a hardware or software component) of the electronic device 701 coupled with the processor 720, and may perform various data processing or computation. According to an embodiment, as at least part of the data processing or computation, the processor 720 may store a command or data received from another component (e.g., the sensor module 776 or the communication module 790) in volatile memory 732, process the command or the data stored in the volatile memory 732, and store resulting data in non-volatile memory 734. According to an embodiment, the processor 720 may include a main processor 721 (e.g., a central processing unit (CPU) or an application processor (AP)), or an auxiliary processor 723 (e.g., a graphics processing unit (GPU), a neural processing unit (NPU), an image signal processor (ISP), a sensor hub processor, or a communication processor (CP)) that is operable independently from, or in conjunction with, the main processor 721. For example, when the electronic device 701 includes the main processor 721 and the auxiliary processor 723, the auxiliary processor 723 may be adapted to consume less power than the main processor 721, or to be specific to a specified function. The auxiliary processor 723 may be implemented as separate from, or as part of the main processor 721.

The auxiliary processor 723 may control at least some of functions or states related to at least one component (e.g., the display module 760, the sensor module 776, or the communication module 790) among the components of the electronic device 701, instead of the main processor 721 while the main processor 721 is in an inactive (e.g., sleep) state, or together with the main processor 721 while the main processor 721 is in an active state (e.g., executing an application). According to an embodiment, the auxiliary processor 723 (e.g., an image signal processor or a communication processor) may be implemented as part of another component (e.g., the camera module 780 or the communication module 790) functionally related to the auxiliary processor 723. According to an embodiment, the auxiliary processor 723 (e.g., the neural processing unit) may include a hardware structure specified for artificial intelligence model processing. An artificial intelligence model may be generated by machine learning. Such learning may be performed, e.g., by the electronic device 701 where the artificial intelligence is performed or via a separate server (e.g., the server 708). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 730 may store various data used by at least one component (e.g., the processor 720 or the sensor module 776) of the electronic device 701. The various data may include, for example, software (e.g., the program 740) and input data or output data for a command related thereto. The memory 730 may include the volatile memory 732 or the non-volatile memory 734.

The program 740 may be stored in the memory 730 as software, and may include, for example, an operating system (OS) 742, middleware 744, or an application 746.

The input module 750 may receive a command or data to be used by another component (e.g., the processor 720) of the electronic device 701, from the outside (e.g., a user) of the electronic device 701. The input module 750 may include, for example, a microphone, a mouse, a keyboard, a key (e.g., a button), or a digital pen (e.g., a stylus pen).

The sound output module 755 may output sound signals to the outside of the electronic device 701. The sound output module 755 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 760 may visually provide information to the outside (e.g., a user) of the electronic device 701. The display module 760 may include, for example, a display, a hologram device, or a projector and control circuitry to control a corresponding one of the display, hologram device, and projector. According to an embodiment, the display module 760 may include a touch sensor adapted to detect a touch, or a pressure sensor adapted to measure the intensity of force incurred by the touch.

The audio module 770 may convert a sound into an electrical signal and vice versa. According to an embodiment, the audio module 770 may obtain the sound via the input module 750, or output the sound via the sound output module 755 or a headphone of an external electronic device (e.g., an electronic device 702) directly (e.g., wiredly) or wirelessly coupled with the electronic device 701.

The sensor module 776 may detect an operational state (e.g., power or temperature) of the electronic device 701 or an environmental state (e.g., a state of a user) external to the electronic device 701, and then generate an electrical signal or data value corresponding to the detected state. According to an embodiment, the sensor module 776 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 777 may support one or more specified protocols to be used for the electronic device 701 to be coupled with the external electronic device (e.g., the electronic device 702) directly (e.g., wiredly) or wirelessly. According to an embodiment, the interface 777 may include, for example, a high definition multimedia interface (HDMI), a universal serial bus (USB) interface, a secure digital (SD) card interface, or an audio interface.

A connecting terminal 778 may include a connector via which the electronic device 701 may be physically connected with the external electronic device (e.g., the electronic device 702). According to an embodiment, the connecting terminal 778 may include, for example, an HDMI connector, a USB connector, an SD card connector, or an audio connector (e.g., a headphone connector).

The haptic module 779 may convert an electrical signal into a mechanical stimulus (e.g., a vibration or a movement) or electrical stimulus which may be recognized by a user via his tactile sensation or kinesthetic sensation. According to an embodiment, the haptic module 779 may include, for example, a motor, a piezoelectric element, or an electric stimulator.

The camera module 780 may capture a still image or moving images. According to an embodiment, the camera module 780 may include one or more lenses, image sensors, image signal processors, or flashes.

The power management module 788 may manage power supplied to the electronic device 701. According to an embodiment, the power management module 788 may be implemented as at least part of, for example, a power management integrated circuit (PMIC).

The battery 789 may supply power to at least one component of the electronic device 701. According to an embodiment, the battery 789 may include, for example, a primary cell which is not rechargeable, a secondary cell which is rechargeable, or a fuel cell.

The communication module 790 may support establishing a direct (e.g., wired) communication channel or a wireless communication channel between the electronic device 701 and the external electronic device (e.g., the electronic device 702, the electronic device 704, or the server 708) and performing communication via the established communication channel. The communication module 790 may include one or more communication processors that are operable independently from the processor 720 (e.g., the application processor (AP)) and supports a direct (e.g., wired) communication or a wireless communication. According to an embodiment, the communication module 790 may include a wireless communication module 792 (e.g., a cellular communication module, a short-range wireless communication module, or a global navigation satellite system (GNSS) communication module) or a wired communication module 794 (e.g., a local area network (LAN) communication module or a power line communication (PLC) module). A corresponding one of these communication modules may communicate with the external electronic device via the first network 798 (e.g., a short-range communication network, such as Bluetooth^{™}, wireless-fidelity (Wi-Fi) direct, or infrared data association (IrDA)) or the second network 799 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 792 may identify and authenticate the electronic device 701 in a communication network, such as the first network 798 or the second network 799, using subscriber information (e.g., international mobile subscriber identity (IMSI)) stored in the subscriber identification module 796.

The wireless communication module 792 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 792 may support a high-frequency band (e.g., the mmWave band) to achieve, e.g., a high data transmission rate. The wireless communication module 792 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 792 may support various requirements specified in the electronic device 701, an external electronic device (e.g., the electronic device 704), or a network system (e.g., the second network 799). According to an embodiment, the wireless communication module 792 may support a peak data rate (e.g., 20Gbps or more) for implementing eMBB, loss coverage (e.g., 764dB or less) for implementing mMTC, or U-plane latency (e.g., 0.5ms or less for each of downlink (DL) and uplink (UL), or a round trip of 7ms or less) for implementing URLLC.

The antenna module 797 may transmit or receive a signal or power to or from the outside (e.g., the external electronic device) of the electronic device 701. According to an embodiment, the antenna module 797 may include an antenna including a radiating element composed of a conductive material or a conductive pattern formed in or on a substrate (e.g., a printed circuit board (PCB)). According to an embodiment, the antenna module 797 may include a plurality of antennas (e.g., array antennas). In such a case, at least one antenna appropriate for a communication scheme used in the communication network, such as the first network 798 or the second network 799, may be selected, for example, by the communication module 790 (e.g., the wireless communication module 792) from the plurality of antennas. The signal or the power may then be transmitted or received between the communication module 790 and the external electronic device via the selected at least one antenna. According to an embodiment, another component (e.g., a radio frequency integrated circuit (RFIC)) other than the radiating element may be additionally formed as part of the antenna module 797.

According to various embodiments, the antenna module 797 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 701 and the external electronic device 704 via the server 708 coupled with the second network 799. Each of the electronic devices 702 or 704 may be a device of a same type as, or a different type, from the electronic device 701. According to an embodiment, all or some of operations to be executed at the electronic device 701 may be executed at one or more of the external electronic devices 702, 704, or 708. For example, if the electronic device 701 should perform a function or a service automatically, or in response to a request from a user or another device, the electronic device 701, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 701. The electronic device 701 may provide the outcome, with or without further processing of the outcome, as at least part of a reply to the request. To that end, a cloud computing, distributed computing, mobile edge computing (MEC), or client-server computing technology may be used, for example. The electronic device 701 may provide ultra low-latency services using, e.g., distributed computing or mobile edge computing. In another embodiment, the external electronic device 704 may include an internet-of-things (IoT) device. The server 708 may be an intelligent server using machine learning and/or a neural network. According to an embodiment, the external electronic device 704 or the server 708 may be included in the second network 799. The electronic device 701 may be applied to intelligent services (e.g., smart home, smart city, smart car, or healthcare) based on 5G communication technology or IoT-related technology.

FIG. 8 is a block diagram 800 illustrating the display module 760 according to various embodiments. Referring to FIG. 8, the display module 760 may include a display 810 and a display driver integrated circuit (DDI) 830 to control the display 810. The DDI 830 may include an interface module 831, memory 833 (e.g., buffer memory), an image processing module 835, or a mapping module 837. The DDI 830 may receive image information that contains image data or an image control signal corresponding to a command to control the image data from another component of the electronic device 701 via the interface module 831. For example, according to an embodiment, the image information may be received from the processor 720 (e.g., the main processor 721 (e.g., an application processor)) or the auxiliary processor 723 (e.g., a graphics processing unit) operated independently from the function of the main processor 721. The DDI 830 may communicate, for example, with touch circuitry 850 or the sensor module 776 via the interface module 831. The DDI 830 may also store at least part of the received image information in the memory 833, for example, on a frame by frame basis. The image processing module 835 may perform pre-processing or post-processing (e.g., adjustment of resolution, brightness, or size) with respect to at least part of the image data. According to an embodiment, the pre-processing or post-processing may be performed, for example, based at least in part on one or more characteristics of the image data or one or more characteristics of the display 810. The mapping module 837 may generate a voltage value or a current value corresponding to the image data preprocessed or post-processed by the image processing module 835. According to an embodiment, the generating of the voltage value or current value may be performed, for example, based at least in part on one or more attributes of the pixels (e.g., an array, such as an RGB stripe or a pentile structure, of the pixels, or the size of each subpixel). At least some pixels of the display 810 may be driven, for example, based at least in part on the voltage value or the current value such that visual information (e.g., a text, an image, or an icon) corresponding to the image data may be displayed via the display 810.

According to an embodiment, the display module 760 may further include the touch circuitry 850. The touch circuitry 850 may include a touch sensor 851 and a touch sensor IC 853 to control the touch sensor 851. The touch sensor IC 853 may control the touch sensor 851 to sense a touch input or a hovering input with respect to a certain position on the display 810. To achieve this, for example, the touch sensor 851 may detect (e.g., measure) a change in a signal (e.g., a voltage, a quantity of light, a resistance, or a quantity of one or more electric charges) corresponding to the certain position on the display 810. The touch circuitry 850 may provide input information (e.g., a position, an area, a pressure, or a time) indicative of the touch input or the hovering input detected via the touch sensor 851 to the processor 720. According to an embodiment, at least part (e.g., the touch sensor IC 853) of the touch circuitry 850 may be formed as part of the display 810 or the DDI 830, or as part of another component (e.g., the auxiliary processor 723) disposed outside the display module 760.

According to an embodiment, the display module 760 may further include at least one sensor (e.g., a fingerprint sensor, an iris sensor, a pressure sensor, or an illuminance sensor) of the sensor module 776 or a control circuit for the at least one sensor. In such a case, the at least one sensor or the control circuit for the at least one sensor may be embedded in one portion of a component (e.g., the display 810, the DDI 830, or the touch circuitry 850)) of the display module 760. For example, when the sensor module 776 embedded in the display module 760 includes a biometric sensor (e.g., a fingerprint sensor), the biometric sensor may obtain biometric information (e.g., a fingerprint image) corresponding to a touch input received via a portion of the display 810. As another example, when the sensor module 776 embedded in the display module 760 includes a pressure sensor, the pressure sensor may obtain pressure information corresponding to a touch input received via a partial or whole area of the display 810. According to an embodiment, the touch sensor 851 or the sensor module 776 may be disposed between pixels in a pixel layer of the display 810, or over or under the pixel layer.

As described above, an electronic device (e.g., the electronic device 100) may comprise a display (e.g., the display 120), an illuminance sensor (e.g., the illuminance sensor 120), and one or more processors (e.g., the one or more processors 110) including first processing circuitry (e.g., the first processing circuitry 111), second processing circuitry (e.g., the second processing circuitry 112), and third processing circuitry (e.g., the third processing circuitry 113). The third processing circuitry may be configured to, while the display operates with a state for lower power consumption, transmit, to the second processing circuitry from among the first and second processing circuitry, an illuminance level obtained using the illuminance sensor for maintaining a state of the first processing circuitry for lower power consumption. The second processing circuitry may be configured to, in response to the reception of the illuminance level from the third processing circuitry, transmit, to the display, a command to change a brightness level of an image displayed on the display that operates with the state for lower power consumption. For example, the state of the first processing circuitry is maintained while the brightness level of the image is changed from a first brightness level to a second brightness level in accordance with the command.

For example, the third processing circuitry may be configured to, while the display operates with the state for lower power consumption, obtain illuminance data from the illuminance sensor, identify whether the illuminance level corresponding to the illuminance data is different from a previous illuminance level that was last transmitted to the second processing circuitry, and in response to the illuminance level being different from the previous illuminance level, transmit the illuminance level to the second processing circuitry.

For example, the third processing circuitry may be configured to, in response to the illuminance level being the same as the previous illuminance level, refrain from or block transmitting the illuminance level to the second processing circuitry.

For example, the electronic device may comprise a volatile memory configured to store a plurality of commands respectively corresponding to a plurality of illuminance levels including the illuminance level to respectively provide a plurality of brightness levels including the first and second brightness levels. The third processing circuitry may be configured to, read the command corresponding to the illuminance level from the volatile memory, and transmit the command to the display.

For example, the first processing circuitry may be configured to, while the first processing circuitry operates with another state of the first processing circuitry distinct from the state of the first processing circuitry, write the commands to the volatile memory, and after the commands are written to the volatile memory, enter the state of the first processing circuitry in accordance with the display operating with the state for lower power consumption.

For example, the state of the first processing circuitry may be a state in which a main internal clock in the first processing circuitry is turned off, and the another state of the first processing circuitry may be a state in which the main internal clock is turned on.

For example, the first processing circuitry may be configured to, in response to a boot-up of the electronic device, write the commands to the volatile memory based on an activation of a function adaptively changing a brightness level provided by the display in accordance with changes in illuminance level.

For example, the first processing circuitry may be configured to, based on a user input for setting of brightness level provided by the display that operates with another state distinct from the state for lower power consumption, obtain a plurality of first candidate brightness levels respectively allocated to the illuminance levels, compare, with the first candidate brightness levels, a plurality of second candidate brightness levels respectively allocated to the illuminance levels for setting of default brightness level provided by the display that operates with the state for lower power consumption, in accordance with a result of the comparison, set the first candidate brightness levels as the brightness levels or set the second candidate brightness levels as the brightness levels, and write, to the volatile memory, the commands obtained based on the set brightness levels.

For example, the first processing circuitry may be configured to, in response to identifying, in accordance with the comparison, that each of the first candidate brightness levels is lower than each of the second candidate brightness levels, set the first candidate brightness levels as the brightness levels, and in response to identifying, in accordance with the comparison, that each of the first candidate brightness levels is higher than or equal to each of the second candidate brightness levels, set the second candidate brightness levels as the brightness levels.

For example, the first processing circuitry may be configured to write the commands to the volatile memory using a hardware abstraction layer (HAL).

For example, the volatile memory may comprise a dynamic random access memory (DRAM).

For example, the display may operate with the state for lower power consumption for a function of always on display (AoD).

For example, the first processing circuitry may comprise a central processing unit (CPU), the second processing circuitry may comprise a micro processor unit (MPU), and the third processing circuitry may comprise a sensor interface or a sensor hub.

For example, the first processing circuitry may comprise a big core of a central processing unit (CPU) or a performance core of the CPU, the second processing circuitry may comprise a little core of the CPU or an efficiency core of the CPU, and the third processing circuitry may comprise a sensor interface or a sensor hub.

For example, the third processing circuitry may be configured to, while the display operates with another state distinct from the state for lower power consumption, transmit, to the first processing circuitry from among the first and second processing circuitry, the illuminance level. For example, the first processing circuitry may be configured to, in response to the reception of the illuminance level from the third processing circuitry, transmit, to the display, a command for changing a brightness level of an image displayed on the display that operates with the another state.

As described above, an electronic device (e.g., the electronic device 100) may comprise a display (e.g., the display 120), an illuminance sensor (e.g., the illuminance sensor 130), and one or more processors (e.g., the one or more processors 110). The one or more processors may be configured to, while the display operates with a first state for lower power consumption, change a brightness level of an image displayed on the display by transmitting, to the display, a command corresponding to an illuminance level obtained via the illuminance sensor using a power in a first range, and while the display operates with a second state different from the first state, change a brightness level of an image displayed on the display by transmitting, to the display, a command corresponding to the illuminance level using a power in a second range higher than the first range.

For example, the electronic device 100 may comprise a volatile memory. The one or more processors may be configured to, while the display operates with the second state and the one or more processors operate using the power within the second range, write, to the volatile memory, a plurality of commands respectively corresponding to a plurality of illuminance levels for the display to be operated with the first state, after the plurality of commands are written to the volatile memory, operate using the power within the first range in accordance with the display operating with the first state, while the display operates with the first state, read, from the volatile memory, the command corresponding to the illuminance level from among the plurality of commands, and transmit the command to the display.

For example, the one or more processors may be configured to, in response to a boot-up of the electronic device, write, the plurality of commands to the volatile memory, based on an activation of a function adaptively changing a brightness level provided by the display in accordance with changes in illuminance level.

For example, the one or more processors may include a central processing unit (CPU). For example, the one or more processors may be configured to, while a main internal clock of the CPU is turned off, and operate using the power in the first range, and while the main internal clock is turned on, operate using the power in the second range.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 740) including one or more instructions that are stored in a storage medium (e.g., internal memory 736 or external memory 738) that is readable by a machine (e.g., the electronic device 701). For example, a processor (e.g., the processor 720) of the machine (e.g., the electronic device 701) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a display;
an illuminance sensor; and
one or more processors including first processing circuitry, second processing circuitry, and third processing circuitry,
wherein the third processing circuitry is configured to, while the display operates with a state for lower power consumption, transmit, to the second processing circuitry from among the first and second processing circuitry, an illuminance level obtained using the illuminance sensor for maintaining a state of the first processing circuitry for lower power consumption,
wherein the second processing circuitry is configured to, in response to the reception of the illuminance level from the third processing circuitry, transmit, to the display, a command to change a brightness level of an image displayed on the display that operates with the state for lower power consumption, and
wherein the state of the first processing circuitry is maintained while the brightness level of the image is changed from a first brightness level to a second brightness level in accordance with the command.

2. The electronic device of claim 1, wherein the third processing circuitry is configured to:
while the display operates with the state for lower power consumption, obtain illuminance data from the illuminance sensor;
identify whether the illuminance level corresponding to the illuminance data is different from a previous illuminance level that was last transmitted to the second processing circuitry; and
in response to the illuminance level being different from the previous illuminance level, transmit the illuminance level to the second processing circuitry.

3. The electronic device of claim 2, wherein the third processing circuitry is further configured to, in response to the illuminance level being the same as the previous illuminance level, refrain from or block transmitting the illuminance level to the second processing circuitry.

4. The electronic device of claim 1, further comprising:
a volatile memory configured to store a plurality of commands respectively corresponding to a plurality of illuminance levels including the illuminance level to respectively provide a plurality of brightness levels including the first and second brightness levels,
wherein the third processing circuitry is configured to:
read the command corresponding to the illuminance level from the volatile memory, and
transmit the command to the display.

5. The electronic device of claim 4, wherein the first processing circuitry is configured to:
while the first processing circuitry operates with another state of the first processing circuitry distinct from the state of the first processing circuitry, write the commands to the volatile memory; and
after the commands are written to the volatile memory, enter the state of the first processing circuitry in accordance with the display operating with the state for lower power consumption.

6. The electronic device of claim 5, wherein the state of the first processing circuitry is a state in which a main internal clock in the first processing circuitry is turned off, and
Wherein the another state of the first processing circuitry is a state in which the main internal clock is turned on.

7. The electronic device of claim 5, wherein the first processing circuitry is configured to, in response to a boot-up of the electronic device, write the commands to the volatile memory based on an activation of a function adaptively changing a brightness level provided by the display in accordance with changes in illuminance level.

8. The electronic device of claim 4, wherein the first processing circuitry is further configured to:
based on a user input for setting of brightness level provided by the display that operates with another state distinct from the state for lower power consumption, obtain a plurality of first candidate brightness levels respectively allocated to the illuminance levels;
compare, with the first candidate brightness levels, a plurality of second candidate brightness levels respectively allocated to the illuminance levels for setting of default brightness level provided by the display that operates with the state for lower power consumption;
in accordance with a result of the comparison, set the first candidate brightness levels as the brightness levels or set the second candidate brightness levels as the brightness levels; and
write, to the volatile memory, the commands obtained based on the set brightness levels.

9. The electronic device of claim 8, wherein the first processing circuitry is configured to:
in response to identifying, in accordance with the comparison, that each of the first candidate brightness levels is lower than each of the second candidate brightness levels, set the first candidate brightness levels as the brightness levels; and
in response to identifying, in accordance with the comparison, that each of the first candidate brightness levels is higher than or equal to each of the second candidate brightness levels, set the second candidate brightness levels as the brightness levels.

10. The electronic device of claim 4, wherein the first processing circuitry is further configured to write the commands to the volatile memory using a hardware abstraction layer (HAL).

11. The electronic device of claim 4, wherein the volatile memory comprises a dynamic random access memory (DRAM).

12. The electronic device of claim 1, wherein the display operates with the state for lower power consumption for a function of always on display (AoD).

13. The electronic device of claim 1, wherein the first processing circuitry comprises a central processing unit (CPU),
wherein the second processing circuitry comprises a micro processor unit (MPU), and
wherein the third processing circuitry comprises a sensor interface or a sensor hub.

14. The electronic device of claim 1, wherein the first processing circuitry comprises a big core of a central processing unit (CPU) or a performance core of the CPU,
wherein the second processing circuitry comprises a little core of the CPU or an efficiency core of the CPU, and
wherein the third processing circuitry comprises a sensor interface or a sensor hub.

15. A method executed in an electronic device with a display and an illuminance sensor, the method comprising:
while the display operates with a first state for lower power consumption, changing a brightness level of an image displayed on the display by transmitting, to the display, a command corresponding to an illuminance level obtained via the illuminance sensor using a power in a first range; and
while the display operates with a second state different from the first state, changing a brightness level of an image displayed on the display by transmitting, to the display, a command corresponding to the illuminance level using a power in a second range higher than the first range.
